Europäisches Patentamt

European Patent Office

Office européen des brevets

(19)

(11) Veröffentlichungsnummer: **0 031 457**
A2

(12) **EUROPÄISCHE PATENTANMELDUNG**

(21) Anmeldenummer: 80107320.6

(22) Anmeldetag: 24.11.80

(51) Int. Cl.³: **H 04 N 7/00**, H 04 N 7/16, H 04 H 1/06

(30) Priorität: 20.12.79 DE 2951512

(43) Veröffentlichungstag der Anmeldung: 08.07.81
Patentblatt 81/27

(84) Benannte Vertragsstaaten: **AT BE CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Panzer, Klaus, Dr. Ing., Strassbergerstrasse 47, D-8000 München 40 (DE)**

(54) **Breitband-Vermittlungssystem.**

(57) Die Erfindung bezieht sich auf ein Breitband-Vermittlungssystem für Fernseh-(TV)Signale und gegebenenfalls auch Hörfunksignale, in dem mit den TV-Programmen winkelmodulierte Signale über eine Breitband-Koppelanordnung (KE1, KE2,...) vermittelbar und dann im Frequenzmultiplex über Lichtwellenleiter (AL1...ALt) zu den Teilnehmern (T1...Tt) übertragbar sind. In einem solchen System wird zur TV-Programm-Vermittlung jedes TV-Programm (P1...Pp) in einer Mehrzahl von Frequenzkanälen einer entsprechenden Mehrzahl von frequenzkanalindividuellen Koppelebenen (KE1, KE2,...) zugeführt, so daß jeder Teilnehmer (T1...Tt) in der genannten Mehrzahl von Frequenzkanälen gleichzeitigen Zugang zu einer entsprechenden Mehrzahl von Programmen (P1...Pp) hat. Zusätzliche TV-Programmquellen sowie Tonprogrammquellen (Pz) können über zusätzliche Frequenzkanäle ständig mit den Teilnehmern (T1...T) verbunden sein.

SIEMENS AKTIENGESELLSCHAFT      VPA     79 P 7 8 1 8 EUR
Berlin und München

## Breitband-Vermittlungssystem

Die Erfindung bezieht sich auf ein Breitband-Vermittlungssystem zum wahlweisen Verbinden von Breitbandsignalquellen mit breitbandsignalempfangenden Teilnehmern über eine Breitband-Koppelanordnung, in der die Koppelpunktschaltkreise, deren Funktion es ist, Eingangsleitungen mit Ausgangsleitungen der Koppelanordnung wahlweise zu verbinden, im Hinblick auf durchzuschaltende, mit den Breitbandsignalen winkelmodulierte Signale mit Signalfrequenzen von z.B. bis über 100 MHz durch in ECL-Technik realisierte Verknüpfungsglieder gebildet sein können (DE-AS 28 28 662; s.auch Pfannschmidt: "Arbeitsgeschwindigkeitsgrenzen von Koppelnetzwerken für Breitband-Digitalsignale", Diss. TU Bswg. 1978).

Mit einer solchen Breitband-Koppelanordnung können z.B. TV-Programme zu Teilnehmern, die solche Programme empfangen wollen, hin vermittelt werden, wie dies neuere Entwicklungen der Fernmeldetechnik mit sich bringen, die zu Breitbandkommunikationsnetzen mit durch Lichtwellenleiter gebildeten Teilnehmerleitungen führen, wobei sich in der Teilnehmerebene ein Sternnetz von Lichtwellenleitern mit einem Lichtwellenleiter je Wohnungseinheit als günstig erweist, der eine (zweckmäßigerweise mit der nächstgelegenen Fernsprech-Vermittlungsstelle räumlich vereinigte) Breitband-Vermittlungsstelle mit der Wohnung des Teilnehmers verbindet und über den ggf. alle Fernmeldedienste für die betreffende Wohneinheit abgewickelt werden können, wobei für einen zukunftssicheren Wohnungsanschluß beispielsweise die Bereitstellung zumindest etwa folgender Kommunikationsmöglichkeiten in Frage kommt:

3 Videokanäle für 3 Video-Empfänger mit unabhängigem Zugriff zu allen von der Vermittlungsstelle erreichbaren TV-Signalquellen bzw. in der Vermittlungsstelle verfügbaren TV-Programmen, 3 Rückkanäle zur Programmauswahl und ggf. zur Abwicklung interaktiver Dienste sowie eine größere Anzahl von UKW-Hörfunkkanälen (Stereo) (ntz 32(1979)3, 150...153; AntennenInformation Nr.63, Juni 1979, S.3...5).

Bei einer solchen TV-Programmvermittlung muß nicht nur mit ein und derselben Programmquelle gleichzeitig eine Vielzahl von Teilnehmeranschlüssen verbunden werden können, sondern es muß umgekehrt auch ein und derselbe Teilnehmeranschluß mit mehreren Programmquellen gleichzeitig verbunden werden können. Hierzu ist es bekannt, bei der Breitband-Vermittlungsstelle teilnehmerindividuelle Frequenz-Multiplexer und bei jedem Teilnehmer einen Frequenz-Demultiplexer vorzusehen und auf dem jeweils dazwischenliegenden Lichtwellenleiter die verschiedenen Programme im Frequenzmultiplex zu übertragen. (AntennenInformation Nr.63, Juni 1979, S.3...5). Dies erfordert einen entsprechenden Multiplex-Aufwand, den herabzusetzen die Erfindung einen Weg zeigt.

Die Erfindung betrifft ein Breitband-Vermittlungssystem zum wahlweisen Verbinden von Breitbandsignalquellen, insbesondere TV-Programmquellen, mit breitbandsignalempfangenden Teilnehmern über eine Breitband-Koppelanordnung, über die mit den Breitbandsignalen, insbesondere TV-Signalen, winkelmodulierte Signale übertragen werden, wonach mehrere solche Signale im Frequenzmultiplex über einen Lichtwellenleiter zum Teilnehmer übertragbar sind; dieses Breitband-Vermittlungssystem ist erfindungsgemäß dadurch gekennzeichnet, daß die winkelmodulierten Signale der einzelnen Signalquellen in einer der Anzahl der gleichzeitig mit ein und demselben Teilnehmer verbindbaren Signalquellen entsprechenden Mehrzahl von Frequenzkanälen eines zumindest diese Frequenzkanäle umfassenden Frequenzmultiplexsystems signalquellenindividuellen Eingängen in frequenzkanalindividuelle Koppelebenen der Breitband-Koppelanordnung zugeführt werden und in der Breitband-Koppelanordnung die jeweils teilnehmerindividuell zusammengeschaltet mit dem zum Teilnehmer führenden Lichtwellenleiter verbundenen Ausgänge aus den frequenzkanalindividuellen Koppelebenen jeweils in teilnehmerindividuell bestimmten Frequenzkanälen der genannten Mehrzahl von Frequenzkanälen mit der jeweils gewünschten Signalquelle verbunden werden.

Die von einer die Anzahl der verfügbaren TV-Programmquellen um ein Vielfaches übersteigenden Anzahl von Teilnehmern ausgehende Erfindung bringt den Vorteil einer wesentlichen Verringerung des erforderlichen
Frequenzmultiplexer-Aufwandes mit sich.

Dabei kann der Aufwand noch weiter dadurch begrenzt werden, daß in weiterer Ausgestaltung der Erfindung n signalquellenindividuellen Eingängen in n frequenzkanalindividuelle Koppelebenen der Breitband-Koppelanordnung jeweils eine eingangsseitig von der zugehörigen Breitbandsignalquelle mit deren Breitbandsignal beaufschlagte
Auffächerungsschaltung mit n Frequenzumsetzern vorgeschaltet ist, die durch n gegenphasig zu einem (n+1)-ten
spannungsgesteuerten Oszillator mit dem Breitbandsignal
beaufschlagte, jeweils zusammen mit dem (n+1)-ten
Oszillator einen Mischer beaufschlagende spannungsgesteuerte Oszillatoren gebildet ist; dies vermeidet
den Aufwand eines jeweils eigenen Gegentaktmodulators
bei dennoch guter Linearität der jeweiligen Modulationskennlinie.

In weiterer Ausgestaltung der Erfindung können zusätzliche
Breitbandsignalquellen, insbesondere TV-Programmquellen,
in zusätzlichen Frequenzkanälen des Frequenzmultiplexsystems ständig mit dem zum Teilnehmer führenden Lichtwellenleiter verbunden sein; dies ermöglicht eine zusätzliche Ausnutzung noch freier Teile des im Breitband-Vermittlungssystem vorgesehenen Frequenzmultiplexsystems.
Alternativ oder auch zusätzlich dazu können in weiterer
Ausgestaltung der Erfindung auch schmalerbandige Signalquellen, insbesondere Tonprogrammquellen, in zusätzlichen
schmalerbandigen Frequenzkanälen des Frequenzmultiplexsystems ständig mit dem zum Teilnehmer führenden Lichtwellenleiter verbunden sein; auch hierdurch können zusätzlich noch freie Teile des im Breitband-Vermittlungssystem vorgesehenen Frequenzmultiplexsystems ausgenutzt werden. Dabei ist es zweckmäßig, in weiterer Ausgestaltung der Erfindung den Tonprogrammquellen jeweils eine Frequenzhuberhöhungsschaltung nachzuschalten, die den Frequenzhub um etwa 1 bis 2 Größenordnungen größer als die maximale Modulationsfrequenz macht; dies gestattet es, bei einem gewünschten Signal/Geräusch-Verhältnis eine relativ große Anzahl von Tonprogrammquellen mit dem zum Teilnehmer führenden Lichtwellenleiter zu verbinden.

Weitere Besonderheiten der Erfindung ergeben sich aus den nachfolgenden Erläuterungen der Erfindung anhand der Zeichnungen. Dabei zeigt

Fig.1 ein Ausführungsbeispiel für ein Breitband-Vermittlungssystem gemäß der Erfindung;

Fig.2 verdeutlicht die Lage von Frequenzkanälen in einem Frequenzmultiplexsystem.

Fig.3 zeigt weitere schaltungstechnische Besonderheiten.

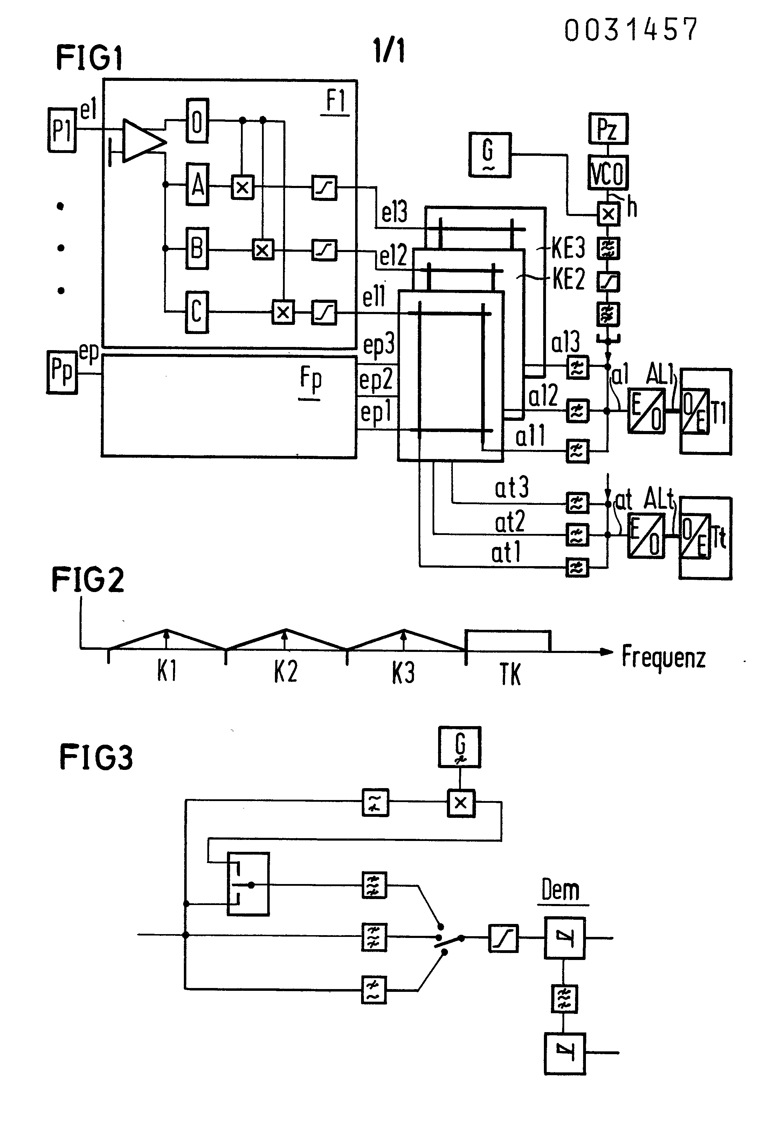

In der Zeichnung Fig.1 ist schematisch in einem zum Verständnis der Erfindung erforderlichen Umfange ein Breitband-Vermittlungssystem mit einer Breitband-Koppelanordnung BK dargestellt, über die Breitbandsignalquellen P1...Pp, die insbesondere durch Fernsehprogrammquellen gegeben sein mögen, mit breitbandsignalempfangenden Teilnehmern T1...Tt verbindbar sind; diese Teilnehmer mögen z.B. jeweils einen Wohnungsanschluß bilden, zu/von dem in der eingangs erläuterten Weise jeweils eine Mehrzahl von Kommunikationsmöglichkeiten gegeben sein mag. Über die Breitband-Koppelanordnung BK werden mit den vorzugsweise durch TV-Signale gegebenen Breitbandsignalen winkelmodulierte Signale übertragen, wonach jeweils mehrere solche Signale im Frequenzmultiplex über einen

0031457

Lichtwellenleiter AL1...ALt zum Teilnehmer T1...Tt übertragbar sind.

Die einzelnen Breitbandsignalquellen P1...Pp sind über entsprechende Modulationsschaltungen F1...Fp an signalquellenindividuelle Eingänge e11, e12, e13;...; ep1, ep2, ep3 der Breitband-Koppelanordnung BK angeschlossen, an deren teilnehmerindividuelle Ausgänge a11, a12, a13;...; at1, at2, at3 die Teilnehmer T1...Tt angeschlossen sind; über in der Zeichnung nicht näher dargestelle Koppelpunktschalter sind die einzelnen Eingangsleitungen e11, e12, e13;...;ep1, ep2, ep3 mit den Ausgangsleitungen a11, a12, a13;...;at1, at2, at3 verbindbar. Die Koppelpunktschalter können dabei in (z.B. aus DE-AS 28 28 662) bekannter Weise durch vorzugsweise in ECL-Technik realisierte Verknüpfungsglieder, z.B. durch UND-Glieder beispielsweise des Typs 10 104 und/oder durch NOR-Glieder beispielsweise des Typs 10 102 gebildet sein; sie können auch jeweils zu mehreren monolithischintegriert auf einem Chip zusammengefaßt sein.

Über die Breitband-Koppelanordnung BK werden deren teilnehmerindividuelle Ausgänge jeweils in teilnehmerindividuell (vorzugsweise über Teilnehmer-Rückkanäle, wie sie eingangs erwähnt wurden) bestimmten Frequenzkanälen eines Frequenzmultiplexsystems mit einem jeweils gewünschten signalquellenindividuellen Eingang der Breitband-Koppelanordnung verbunden. Hierzu sei ein Blick auf die Zeichnung Fig.2 geworfen, die die Lage der Frequenzbänder solcher Frequenzkanäle in einem Frequenzmultiplexsystem verdeutlicht. Solche Frequenzkanäle sind dort mit K1, K2, K3 bezeichnet; mit TK ist ein weiterer Bereich bezeichnet, in dem schmalerbandige Frequenzkanäle untergebracht sein können, wie dies unten noch näher erläutert wird. Die drei Breitbandkanäle K1, K2, K3 können z.B. Mittenfrequenzen von etwa 20, 48, 76 MHz bei Kanalbreiten von etwa 28 MHz aufweisen; der Bereich TK könnte z.B. von etwa 20 bis 110 MHz reichen und z.B. 20 Kanäle mit Kanalbreiten von etwa 1 MHz enthalten.

In den einzelnen, vorzugsweise nach Maßgabe des jeweiligen Empfängers einer Mehrzahl von beim jeweiligen Teilnehmer T1...Tt vorgesehenen Empfängern bestimmten Frequenzkanälen K kann ein Teilnehmer T1...Tt über die jeweils in Frage kommenden Koppelpunktschalter mit den einzelnen signalquellenindividuellen Eingängen e11, e12, e13;...; ep1, ep2, ep3 (bzw. e1...ep) der Breitband-Koppelanordnung BK verbunden sein, wobei ein Teilnehmer ggf. auch in mehreren Frequenzkanälen an ein und dieselbe Breitbandsignalquelle P1...Pp angeschaltet werden kann.

Hierzu weist die Breitband-Koppelanordnung BK frequenzkanalindividuelle Koppelebenen KE1, KE2, KE3 auf, und es werden die von den einzelnen Breitbandsignalquellen P1...Pp her winkelmodulierten Signale in einer der Anzahl der gleichzeitig mit ein und demselben Teilnehmer T1...Tt verbindbaren Signalquellen P1...Pp entsprechenden Mehrzahl von Frequenzkanälen K1...K3 (in Fig.2) des zumindest diese Frequenzkanäle (K1...K3) umfassenden Frequenzmultiplexsystems (Fig.2) signalquellenindividuellen Eingängen e11, e12, e13;...;ep1, ep2, ep3 der einzelnen frequenzkanalindividuellen Koppelebenen KE1...KE3 der Breitband-Koppelanordnung zugeführt. Dabei sind gemäß Fig.1 im Beispiel 3 - den Frequenzkanälen K1, K2, K3 gemäß Fig.2 entsprechende - frequenzkanalindividuelle Koppelebenen KE1, KE2, KE3 vorgesehen. Den jeweils 3 bzw., allgemeiner gesagt, n signalquellenindividuellen Eingängen e11, e12, e13;...;ep1, ep2, ep3 in die n (= 3) frequenzkanalindividuellen Koppelebenen KE1, KE2, KE3 der Breitband-Koppelanordnung BK ist dazu jeweils eine Auffächerungsschaltung F1...Fp vorgeschaltet, die eingangsseitig von der zugehörigen Breitbandsignalquelle P1...Pp mit deren Breitbandsignal beaufschlagt wird.

Die Auffächerungsschaltung F1 enthält im Beispiel n = 3 Frequenzumsetzer (Frequenzmodulatoren), die durch n gegenphasig zu einem (n+1)-ten spannungsgesteuerten Oszillator mit dem Breitbandsignal beaufschlagte, jeweils zusammen mit dem (n+1)-ten Oszillator O einen Mischer, beispielsweise einen Siemens-Mischer S 042, beaufschlagende spannungsgesteuerte Oszillatoren A, B, C gebildet sind; bei bereits der Trägerfrequenz entsprechender Oszillatorfrequenz kann ggf. auch der Mischer entfallen. Wie in Fig.1 angedeutet ist, kann den einzelnen Mischern jeweils ein Begrenzer nachgeschaltet sein. In entsprechender Weise können auch die übrigen Auffächerungsschaltungen ....Fp ausgebildet sein.

Mit Hilfe der Auffächerungsschaltungen F1...Fp wird sichergestellt, daß jedes von einer Signalquelle P1...Pp abgegebene Breitbandsignal in jedem der Frequenzkanäle K1, K2, K3 an jeweils einem signalquellenindividuellen Eingang e11, e12, e13;...;ep1, ep2, ep3 der Breitband-Koppelanordnung BK verfügbar ist und dementsprechend über die jeweils in Frage kommenden Koppelpunktschalter zu den einzelnen teilnehmerindividuellen Ausgängen a11, a12, a13;...; at1, at2, at3 und weiter im Frequenzmultiplex über den zum jeweiligen Teilnehmer (T) führenden Lichtwellenleiter (AL) zu den einzelnen Teilnehmern T1...Tt hin vermittelt werden kann.

In dem in Fig.1 dargestellten Ausführungsbeispiel sind dabei den genannten teilnehmerindividuellen Ausgängen jeweils oberwellenunterdrückende Filter nachgeschaltet, die ausgangsseitig jeweils teilnehmerindividuell zusammengeschaltet sind.

Wie aus Fig.1 weiter ersichtlich wird, können mit den teilnehmerindividuellen Ausgangsleitungen at...at zusätzlich schmalerbandige Signalquellen, insbesondere Tonprogrammquellen, verbunden sein, so daß diese Tonprogrammquellen, wie die in Fig.1 dargestellte Programmquelle Pz, in zusätzlichen schmalerbandigen Frequenzkanälen des Frequenzmultiplexsystems (s.Fig.2) ständig mit dem zum jeweiligen Teilnehmer T1...Tt führenden Lichtwellenleiter AL1...ALt verbunden sind; ebenso können in entsprechender Weise auch zusätzliche Breitbandsignalquellen, insbesondere TV-Programmquellen, in zusätzlichen Frequenzkanälen des Frequenzmultiplexsystems ständig mit den zu den Teilnehmern T1...Tt führenden Lichtwellenleitern AL1...ALt verbunden sein. Dabei ist im Ausführungsbeispiel gemäß Fig.1 einem von der Tonprogrammquelle Pz in seiner Frequenz modulierten spannungsgesteuerten Oszillator VCO (bzw. einem Empfänger, der das von einem UKW-Rundfunksender ausgestrahlte Programm empfängt,(aber noch nicht demoduliert)), eine Frequenzhuberhöhungsschaltung nachgeschaltet, die den Frequenzhub um etwa 1 bis 2 Größenordnungen größer als die maximale Modulationsfrequenz machen möge. Hierzu kann, wie dies aus Fig.1 ersichtlich wird, das mit dem Tonprogramm frequenzmodulierte Signal, das auf der Leitung h auftritt, in bekannter Weise auf eine Zwischenfrequenz umgesetzt werden, die beispielsweise etwa bei 10 MHz liegen mag, wonach das umgesetzte Signal begrenzt wird, so daß man ein sehr oberwellenreiches Signal erhält. Hieraus wird dann mittels eines Bandpaßfilters eine Oberwelle weitergeleitet, deren Frequenz um etwa 1 bis 2 Größenordnungen größer als die Zwischenfrequenz ist und deren Frequenzhub damit ebenfalls um etwa 1 bis 2 Größenordnungen (Zehnerpotenzen) größer als zuvor ist. Dies hat zur Folge, daß empfangsseitig ein hohes Signal/Geräusch-Verhältnis bereits bei Aussteuerung des Elektro/Opto-Wandlers E/O mit noch niedrigem Tonsignalpegel erreicht

0031457

wird, der eine gleichzeitige Beaufschlagung des Elektro/Opto-Wandlers E/O mit einer entsprechend großen Anzahl weiterer Tonprogrammsignale ermöglicht.

Die über den jeweiligen Lichtwellenleiter AL1,....ALt zum jeweiligen Teilnehmer T gelangten Signale können beim Teilnehmer eines Breitbandkommunikationsnetzes, wie es eingangs erwähnt wurde, nach Umsetzung in einem Opto/Elektro-Wandler O/E auf einer wohneinheitsindividuell vorgesehenen, gemeinsam für Video- und Hörfunksignale zu benutzenden und zu einer oder mehreren Anschlußsteckdosen führenden Koaxialleitung zum jeweiligen Empfänger übertragen werden, wie dies prinzipiell bereits an anderer Stelle (DE-P 29 34 358.6) beschrieben wird. Dabei ist beim Empfänger ggf. zur Anpassung an konventionelle Empfangsgeräte eine Umsetzschaltung vorzusehen, wie sie in Fig.3 dargestellt ist. Eine solche Umsetzschaltung kann durch entsprechende Filter jeweils einen der im Beispiel drei Kanäle K1, K2, K3 (in Fig.2) herausfiltern und das darin übertragene Breitbandsignal einem Demodulator Dem zuführen, von dessen Ausgang her die Signale unter Trennung von Bild- und Tonsignal dem Monitoreingang eines Video-Empfängers zuführbar sind. Bei Fernsehgeräten, die keinen Monitoreingang aufweisen, können die Videosignale auch in die VHF-Lage umgesetzt und in empfängergerechter Form einem HF-Eingang des Empfängers zugeführt werden.

In zusätzlichen Frequenzkanälen des Frequenzmultiplexsystems gemäß Fig.2 z.B. bei Mittenfrequenzen von etwa 124, 152, 180, 208, 236 MHz übertragene Breitbandsignale können in der Umsetzerschaltung gemäß Fig.3 mittels eines entsprechenden Hochpasses herausgefiltert und danach mittels eines Zwischenfrequenzumsetzers beispielsweise in eine dem Frequenzkanal K3 (in Fig.3) entsprechende Frequenzlage umgesetzt werden und dann anstelle des im Frequenzkanal K3 übertragenen Breitbandsignals über das diesem Kanal zugehörige Filter dem Demodulator Dem zugeführt werden.

9 Patentansprüche

## Patentansprüche

1. Breitband-Vermittlungssystem zum wahlweisen Verbinden von Breitbandsignalquellen, insbesondere TV-Programmquellen, mit breitbandsignalempfangenden Teilnehmern über eine Breitband-Koppelanordnung, über die mit den Breitbandsignalen, insbesondere TV-Signalen, winkelmodulierte Signale übertragen werden, wonach mehrere solche Signale im Frequenzmultiplex über einen Lichtwellenleiter zum Teilnehmer übertragbar sind, dadurch gekennzeichnet, daß die winkelmodulierten Signale der einzelnen Signalquellen (P1...Pp) in einer der Anzahl (3) der gleichzeitig mit ein und demselben Teilnehmer (T1...Tt) verbindbaren Signalquellen (P1...Pp) entsprechenden Mehrzahl von Frequenzkanälen (K1...K3) eines zumindest diese Frequenzkanäle (K1...K3) umfassenden Frequenzmultiplexsystems signalquellenindividuellen Eingängen (e11, e12, e13) in frequenzkanalindividuelle Koppelebenen (KK1, KE2, KE3) der Breitband-Koppelanordnung zugeführt werden und in der Breitband-Koppelanordnung die jeweils teilnehmerindividuell zusammengeschaltet mit dem zum Teilnehmer (T1...Tt) führenden Lichtwellenleiter verbundenen Ausgänge (at1, at2, at3) aus den frequenzkanalindividuellen Koppelebenen (KE1, KE2, KE3) jeweils in teilnehmerindividuell bestimmten Frequenzkanälen (K1...K3) der genannten Mehrzahl von Frequenzkanälen (K1...K3) mit der jeweils gewünschten Signalquelle (P1...Pp) verbunden werden.

2. Breitband-Vermittlungssystem nach Anspruch 1, dadurch gekennzeichnet, daß n (3) signalquellenindividuellen Eingängen (e11, e12, e13;...; ep1, ep2, ep3) in n (3) frequenzkanalindividuelle Koppelebenen (KE1, KE2, KE3) der Breitband-Koppelanordnung jeweils eine eingangsseitig von der zugehörigen Breitbandsignalquelle (P1...Pp) mit deren Breitbandsignal beaufschlagte Auffächerungsschaltung (F1...Fp) mit n Frequenzmodulatoren vorgeschaltet ist, die durch n (3) gegenphasig zu einem (n+1)-ten spannungsgesteuerten Oszillator (O) mit dem Breitband-signal beaufschlagte, jeweils zusammen mit dem (n+1)-ten Oszillator (O) einen Mischer beaufschlagende spannungs-gesteuerte Oszillatoren (A, B, C) gebildet ist.

3) Breitband-Vermittlungssystem nach Anspruch 1 oder 2, dadurch gekennzeichnet, daß 3 Frequenzkanäle im VHF-Band vorgesehen sind.

4) Breitband-Vermittlungssystem nach einem der Ansprüche 1 bis 3, dadurch gekennzeichnet, daß den Ausgängen (a11, a12, a13; at1, at2, at3) der Koppelebenen (KE1, KE2, KE3) oberwellenunterdrückende Filter nachgeschaltet sind.

5) Breitband-Vermittlungssystem nach einem der Ansprüche 1 bis 4, dadurch gekennzeichnet, daß zusätzliche Breitbandsignalquellen, insbesondere TV-Programmquellen, in zusätzlichen Frequenzkanälen des Frequenzmultiplexsystems ständig mit dem zum Teilnehmer (T1...Tt) führenden Lichtwellenleiter verbunden sind.

6) Breitband-Vermittlungssystem nach einem der Ansprüche 1 bis 5, dadurch gekennzeichnet, daß zusätzlich schmalerbandige Signalquellen, insbesondere Tonprogrammquellen, in zusätzlichen schmalerbandigen Frequenzkanälen des Frequenzmultiplexsystems ständig mit dem zum Teilnehmer (T1...Tt) führenden Lichtwellenleiter verbunden sind.

7) Breitband-Vermittlungssystem nach Anspruch 6, gekennzeichnet durch im UKW-Rundfunk-Band liegende schmalerbandige Frequenzkanäle.

8) Breitband-Vermittlungssystem nach Anspruch 6 oder 7, dadurch gekennzeichnet, daß den Tonprogrammquellen jeweils eine Frequenzhuberhöhungsschaltung nachgeschaltet ist, die den Frequenzhub um etwa 1 bis 2 Größenordnungen größer als die maximale Modulationsfrequenz macht.

9) Breitband-Vermittlungssystem nach einem der vorhergehenden Ansprüche, gekennzeichnet durch eine empfangsseitige Umsetzung von in oberhalb des UKW-Rundfunk-Bandes liegenden Frequenzkanälen übertragenen Breitbandsignalen in einen Frequenzkanal des VHF-Bandes.

FIG1

FIG2

Frequenz

FIG3

Dem